# EUROPÄISCHE PATENTSCHRIFT

(11) **EP 3 645 808 B1**
(45) Veröffentlichungstag und Bekanntmachung des Hinweises auf die Patenterteilung: **07.06.2023**
(21) Anmeldenummer: 18735252.1
(22) Anmeldetag: 27.06.2018
(51) Int. Cl.: E04G 11/28, E04G 5/04, E04G 15/04, E04G 17/065, E04G 11/20, E04G 21/14, F16B 13/14, F16B 1/00, E04B 1/41

(54) **SPERRANKER MIT MARKIERUNG**
STOP ANCHOR
ANCRE D'ARRÊT

(30) Priorität: 28.06.2017 DE 202017103863 U
(43) Veröffentlichungstag der Anmeldung: 06.05.2020
(60) Teilanmeldung: 23166240.4
(73) Patentinhaber: DOKA GmbH, 3300 Amstetten (AT)
(72) Erfinder: AMON, Peter, 3300 Amstetten (AT)
(74) Vertreter: Hahner, Ralph
(86) Internationale Anmeldenummer: PCT/EP2018/067183
(87) Internationale Veröffentlichungsnummer: WO 2019/002336

(56) Entgegenhaltungen:
- EP-A1- 2 908 014
- WO-A1-2012/129177
- DE-A1-102010 002 108
- US-A1- 2004 115 022
- US-A1- 2014 026 515

## Beschreibung

Die Erfindung betrifft ein Verankerungselement zur Befestigung einer Kletterschalung an einem Betonkörper.

Gattungsgemäße Verankerungselemente sind im Stand der Technik bekannt. Sie umfassen typischerweise einen verlorenen Sperranker, der in den Beton eingegossen wird, sowie ein potentiell wiedergewinnbares Kopplungselement, das mit dem Sperranker in Verbindung steht und der Anbindung der Kletterschalung dient. Der Sperranker weist einen im Beton gehaltenen Kopf und einen Gewindestab auf, der mit einer Gewindebohrung im Kopplungselement zahnt. Wir verweisen beispielhaft auf die DE 10 2007 059 125 A1. Das Dokument WO 2012129177 offenbart ein Verankerungselement nach dem Oberbegriff des Anspruch 1.

Da sich je nach Art des Kletterschalungssystems unterschiedliche Anforderungen an die Tragfähigkeit der Verankerungssysteme ergeben, sind mehrere Typen von Sperrankern mit unterschiedlichen Dimensionen und Nutzlastkapazitäten bekannt. Nachteilig an den derzeit bekannten Lösungen ist jedoch, dass der Sperrankertyp nur vor dem Einbetonieren identifiziert werden kann. Ist das Verankerungssystem einmal eingesetzt, lässt sich der Sperrankertyp dagegen oft nicht mehr eindeutig ermitteln.

Ziel der Erfindung ist es, ein gattungsgemäßes Verankerungselement bereitzustellen, mit dem diese Nachteile aus dem Stand der Technik überwunden werden können.

Vor diesem Hintergrund betrifft die Erfindung ein Verankerungselement zur Befestigung einer Kletterschalung an einem Betonkörper, nach Anspruch 1, das unter anderem einen Sperranker und ein Kopplungselement umfasst, wobei der Sperranker einen Kopf und eine Gewindestange mit einem Außengewinde aufweist, wobei es sich bei dem Kopplungselement um einen länglichen Rundkörper mit einer Basis, einem Mantel und einer Front handelt, und wobei das Kopplungselement eine von der Basis axial nach innen reichende Ankerbohrung aufweist, die ein Innengewinde aufweist, das mit dem Außengewinde der Gewindestange zahnt. Erfindungsgemäß ist vorgesehen, dass die Stirnseite der Gewindestange eine Markierung aufweist und dass am inneren Ende der Ankerbohrung eine Sichtöffnung vorgesehen ist, sodass die Stirnseite der in der Ankerbohrung aufgenommenen Gewindestange von außen sichtbar ist.

Das Verankerungselement wird im Anwendungsfall einbetoniert und dient zur Montage von Kletterschalungen im Beton. Zur Einfassung des Verankerungselements in den Betonkörper wird es derart an der Schalung befestigt, dass die Front des Kopplungselements an der Schalung anliegt und der verbleibende Teil des Kopplungselements mit dem eingedrehten Sperranker in den Raum zeigt, der mit Beton ausgegossen wird. Der Sperranker liegt dann innerhalb des fertigen Betonkörpers und verbleibt als verlorenes Teil permanent im gehärteten Beton. Das Kopplungselement reicht an die Oberfläche des Betonkörpers und seine Front ist von außen her zugänglich und sichtbar. Es kann dort beispielsweise ein Gewindebolzen eingedreht werden, um die Kletterschalung zu montieren. Das Kopplungselement kann aus dem gehärteten Beton entfernt werden, indem es von der Gewindestange des Ankers gedreht wird und somit wiedergewonnen werden kann. Sperranker und Kopplungselement sind typischerweise vollständig aus Metall gefertigt. Wenn im Rahmen der vorliegenden Erfindungsbeschreibung davon die Rede ist, dass die in der Ankerbohrung aufgenommenen Gewindestange von außen sichtbar ist, dann ist damit gemeint, dass die Markierung im Anwendungsfall durch die Sichtöffnung von der Außenseite des Betonkörpers sichtbar ist.

Entsprechend ist vorgesehen, dass die Sichtöffnung so ausgebildet ist, dass die Stirnseite der in der Ankerbohrung aufgenommenen Gewindestange von der Front des Kopplungselements aus sichtbar ist. So kann erreicht werden, dass die Markierung an der Stirnseite der Gewindestange und mithin am verlorenen Sperranker auch dann von außen erkannt werden kann, wenn der Sperranker mit angeschraubtem Koppungselement einbetoniert ist.

In einer Ausführungsform ist vorgesehen, dass das Kopplungselement ferner eine von der Front axial nach innen reichende Kopplungsbohrung aufweist und dass die Sichtöffnung sich von der Ankerbohrung bis zur Kopplungsbohrung erstreckt. Die Kopplungsbohrung dient zur lösbaren Befestigung eines beliebigen Bauteils am Verankerungselement und damit letztlich am Betonkörper. Es kann vorgesehen sein, dass die Kopplungsbohrung ebenfalls ein Innengewinde aufweist, sodass das Bauteil mit einem Gewindebolzen angeschraubt werden kann. Bei dem Bauteil kann es sich beispielsweise um einen Aufhängeschuh für eine Kletterschalung handeln. Vorzugsweise ist vorgesehen, dass die Ankerbohrung und die Kopplungsbohrung koaxial verlaufen.

In einer Ausführungsform ist vorgesehen, dass der Innendurchmesser der Ankerbohrung kleiner als der Innendurchmesser der Kopplungsbohrung ist. Diese Ausgestaltung ermöglicht einen besseren Blick durch die Kopplungsbohrung auf das Sichtfenster und letztlich auf die Stirnseite der in der Ankerbohrung aufgenommenen Gewindestange.

In einer Ausführungsform ist vorgesehen, dass die Ankerbohrung und die Kopplungsbohrung ineinanderlaufen. In dieser Ausführungsform ist das Kopplungselement also in axialer Richtung von hinten bis vorne durchgebohrt bzw. weist eine von hinten nach vorne verlaufende Durchgangsbohrung auf. Die Bohrung mit dem geringeren Durchmesser weist keinen Boden auf, sodass durch die Kopplungsbohrung eine freie Sicht von außen auf die Stirnseite der in der Ankerbohrung ermöglicht wird.

In einer Ausführungsform ist vorgesehen, dass im Übergangsbereich von Ankerbohrung und Kopplungsbohrung ein Begrenzungselement vorgesehen ist. Das Begrenzungselement dient als Endpunkt der Ankerbohrung bzw. als Einschraubbegrenzung der Gewindestange im Kopplungselement. Er verhindert bei einem fließenden Übergang zwischen den Bohrungen ein zu weites Eindrehen des Sperrankers in das Kopplungselement und dient außerdem als definierter Endpunkt, sodass der Sperranker nicht zu wenig weit eingedreht wird. Dabei kann das Begrenzungselement in der Ankerbohrung nahe der Kopplungsbohrung oder aber auch in der Kopplungsbohrung nahe der Ankerbohrung vorgesehen sein. Selbstverständlich kann als Übergangsbereich auch der Übergang der Kopplungsbohrung in die Ankerbohrung verstanden werden.

In einer Ausführungsform ist vorgesehen, dass die Länge der Gewindestange die Tiefe der Ankerbohrung übersteigt. Der Endpunkt der Ankerbohrung dient sowohl als Stopper als auch als Markierung, sodass der Sperranker nicht zu tief aber auch nicht zu wenig tief in das Kopplungselement eingedreht wird. So kann ein definierter Überstand der Gewindestange erreicht werden.

In einer Ausführungsform ist vorgesehen, dass es sich bei dem Begrenzungselement um einen Stift handelt, der radial von der Mantelfläche der Ankerbohrung absteht. Ein solcher Stift nimmt wenig Fläche des Innendurchmessers der Ankerbohrung ein und lässt daher viel von der Stirnseite des eingedrehten Sperrankers frei, sodass die Markierung in der Regel gut von der Außenseite des Betonkörpers zu erkennen ist. In einer Ausgestaltungsvariante kann der Stift bis an die Mantelfläche des Kopplungselements geführt sein, was herstellungstechnisch vorteilhaft sein kann. In einer anderen Variante kann der Stift in eine Sackbohrung in der Wand der Ankerbohrung eingesteckt sein. In einer wiederum anderen Variante kann eine integrale Fertigung mit oder ein Ankleben an oder Anschweißen an die Wand der Ankerbohrung vorgesehen sein.

In einer anderen Ausführungsform ist vorgesehen, dass es sich bei dem Begrenzungselement um einen zumindest abschnittsweise ringförmigen Einsatz handelt. Durch die vom Ring umschlossene Öffnung wird ebenfalls eine freie Sicht auf die Stirnseite des eingedrehten Sperrankers ermöglicht und mithin eine Sichtöffnung gebildet. Der Einsatz kann in einer Vertiefung an der Innenseite der Ankerbohrung oder der Kopplungsbohrung formschlüssig aufgenommen sein. Dabei kann der Einsatz z.B. auf einem im Übergangsbereich von Ankerbohrung und Kopplungsbohrung geformten Absatz oder einer Schulter sitzen.

In einer Ausführungsform ist vorgesehen, dass die Markierung an der Stirnseite der Gewindestange die Dimension des Sperrankers angibt. Beispielsweise kann die Markierung die Länge und/oder den Durchmesser der Gewindestange und/oder die tragfähigkeiten des Sperrankers anzeigen. Alternativ oder zusätzlich kann die Markierung den Durchmesser des Kopfes des Sperrankers angeben. Eine schriftliche Kennzeichnung bzw. Angabe ist bevorzugt. Die Markierung kann beispielsweise als Schriftcode vorliegen, z.B. in Form von Buchstaben, Zahlen oder Kombinationen daraus.

In einer Ausführungsform ist vorgesehen, dass es sich bei der Markierung an der Stirnseite der Gewindestange um eine Reliefmarkierung handelt, also eine plastische Markierung, wobei Schrift- oder Bildzeichen dreidimensional aus der Oberfläche der Stirnseite hervorstehen oder in das Material hinein gearbeitet sind. Beispiele umfassen Gravuren oder Einprägungen, wie Ritzungen, Punzierungen und dergleichen. Selbstverständlich können diese zusätzlich eine Farbgebung aufweisen. Mit einer Reliefmarkierung ist eine schriftliche Kennzeichnung bzw. Angabe möglich. Es handelt sich um eine dauerhafte Lösung.

In einer anderen Ausführungsform kann es sich bei der Markierung an der Stirnseite der Gewindestange auch um eine Farbmarkierung handeln. Diese kann auch mit einer Reliefmarkierung kombiniert sein.

In einer Ausführungsform ist vorgesehen, dass sich der Mantel des Kopplungselements ausgehend von der Basis konisch bis zur Front erweitert. Die konische Gestalt ermöglicht ein einfacheres Entfernen des Kopplungselements aus dem gehärteten Beton.

In einer Ausführungsform sind Basis und/oder Front flach. Basis und/oder Front können aber auch gekrümmt oder gar halbkugelförmig sein und fließend in den Mantel übergehen.

In einer Ausführungsform ist vorgesehen, dass am Kopplungselement ein Indikatorelement vorgesehen ist. Das Indikatorelement kann an der Front des Kopplungselements angeordnet sein. Es kann lösbar am Kopplungselement angeordnet sein. Alternativ kann es auch fest an der Front des Kopplungselements angeodnet sein. Bei dem Indikatorelement kann es sich beispielsweise um einen Kunststoffelement handeln, das in einer korrespondierenden Vertiefung an der Front des Kopplungselements aufgenommen ist. Es kann beispielsweise stiftförmig sein.

In einer Ausführungsform ist vorgesehen, dass das Indikatorelement zumindest abschnittsweise farbig ausgestaltet ist.

In einer Ausführungsform ist vorgesehen, dass die Markierung an der Stirnseite der Gewindestange und das Indikatorelement eine übereinstimmende Symbolik aufweisen, also beispielsweise dasselbe Symbol oder Bildzeichen oder dieselbe Farbe. In diesem Zusammenhang kann vorgesehen sein, dass das Indikatorelement eine Farbe aufweist, die der Farbe der Farbmarkierung entspricht. Generell kann das Indikatorelement als einfache, der Markierung entsprechende Kennzeichnung an der Front des Kopplungslements vorgesehen sein.

So kann sichergestellt werden, dass ein Benutzer den richtigen Sperranker gemeinsam mit dem richtigen Kopplungselement verwendet.

Erfindungsgemäß ist vorgesehen, dass eine um das Kopplungselement herum angeordnete Hülse vorgesehen ist, die der Außenkontur der Basis und des Mantels des Kopplungselements folgt. Die Hülse kann also im Längsschnitt eine becherförmige Gestalt haben, wobei der Boden des Bechers an der Basis des Kopplungselements anliegt und der Mantel des Bechers am Mantel des Kopplungselements anliegt. Die Hülse vereinfacht das Ausdrehen des Kopplungselements aus dem Beton und hat zusätzlich Schutzfunktion.

Es kann vorgesehen sein, die Hülse von hinten auf das Kopplungselement geschoben ist, dass also die Hülse bei der Zusammenstellung des Verankerungselements mit einer vorderen Öffnung von hinten über den Mantel des Kopplungselements geschoben wird, bis der Boden der Hülse am Boden des Kopplungselements ansteht. In einer Ausführungsform ist vorgesehen, dass die Hülse nicht ganz bis zum vorderen Ende des Mantels reicht sondern ein ringförmiger Kragen am vorderen Mantelende frei bleibt.

Erfindungsgemäß ist vorgesehen, dass am Umfangsrand des Durchbruchs eine Dichtlippe vorgesehen ist, die radial über den Umfangsrand der Öffnung der Ankerbohrung steht. Der Radius des Durchbruchs ist etwas geringer als der Radius der Ankerbohrung und die Dichtlippe durch den resultierenden Überstand des Hülsenbodens gebildet wird. Es kann vorgesehen sein, dass der Hülsenboden im Bereich des Überstands eine verringerte Stärke aufweist, um eine höhere Elastizität der Dichtlippe zu gewährleisten.

In einer Ausführungsform ist vorgesehen, dass das Indikatorelement eine Farbe aufweist, welche der Farbe der Hülse entspricht. So kann sichergestellt werden, dass ein Benutzer die dem Kopplungselement entsprechende, passende Hülse verwendet.

Weitere Einzelheiten und Vorteile der Erfindung ergeben sich aus dem nachfolgend anhand der Figuren diskutierten Ausführungsbeispiel. In den Figuren zeigen:
- Figur 1:: eine perspektivische Teilschnittansicht einer Ausführungsform eines erfindungsgemäßen Verankerungselements;
- Figur 2:: eine seitliche Teilschnittansicht des in Figur 1 gezeigten Verankerungselements im einbetonierten Zustand; und
- Figur 3:: eine perspektivische Schnittansicht eines Kopplungselements einer geringfügig anderen Ausführungsform eines erfindungsgemäßen Verankerungselements.

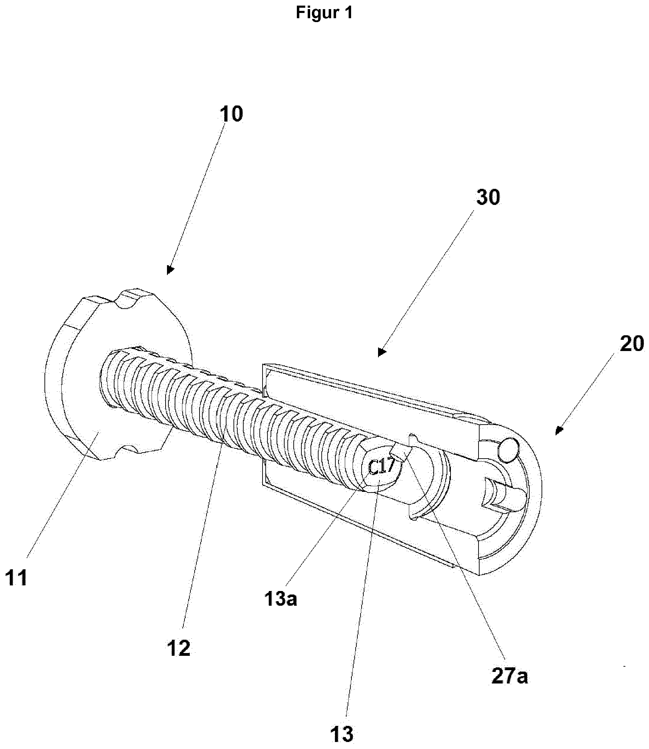

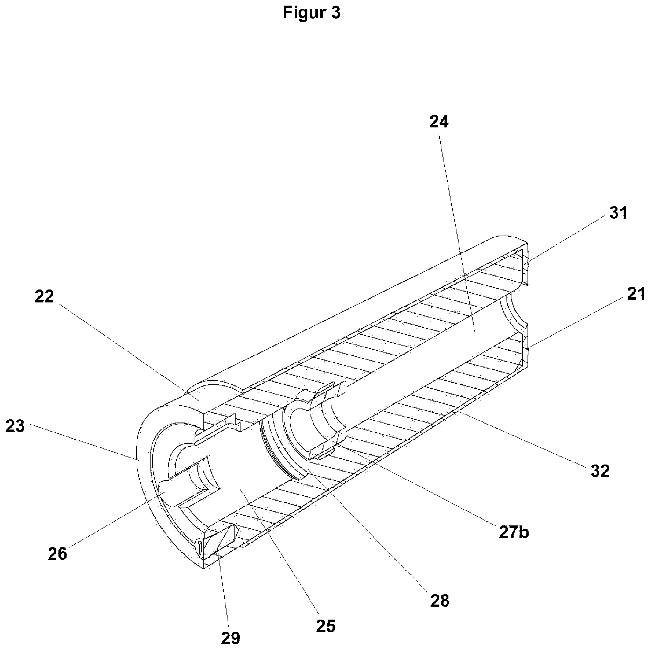

In den Figuren 1-2 ist eine Ausführungsform eines erfindungsgemäßen Verankerungselements dargestellt. In Figur 3 ist ein Kopplungselement einer geringfügig anderen Ausführungsform eines erfindungsgemäßen Verankerungselements dargestellt. Nachfolgend werden beide Ausführungsformen gesammelt beschrieben, da es nur geringfügige Unterschiede gibt, auf die separat eingegangen wird. Für korrespondierende Teile werden dieselben Bezugszeichen verwendet.

Das Verankerungselement beider Ausführungsformen ist allgemein mit dem Bezugszeichen 1 gekennzeichnet und umfasst drei Teile, nämlich einen Sperranker 10, ein Kopplungselement 20 und eine auf das Kopplungselement 20 gesteckte Hülse 30.

Der Sperranker 10 ist aus Stahl gefertigt. Er hat die Gestalt einer Schraube und umfasst einen normal zur Achse A stehenden scheibenförmigen Kopf 11 und eine entlang der Achse A ausgerichtete Gewindestange 12.

Der scheibenförmige Kopf 11 ist flach und ausladend ausgebildet, um eine gute Verankerung im gehärteten Beton zu gewährleisten. Beispielsweise kann der Kopf 11 einen Radius von zwischen 3 und 15 cm, in bestimmten Gestaltungen von 5,5 cm oder 9 cm aufweisen. Der Umfangsrand des Kopfes 11 ist nicht perfekt rund sondern konturiert, um eine bessere Kraftübertragung beim Eindrehen in das Kopplungselement zu ermöglichen.

Der Gewindestab 12 kann eine Länge von beispielsweise 10 bis 20 cm, in bestimmten Gestaltungen von 12,5 cm oder 17,5 cm aufweisen. Der Durchmesser beträgt beispielsweise etwa 0,5 cm bis 2 cm. Bei dem Gewinde des Stabes 12 kann es sich um ein herkömmliches Dywidag-Gewinde handeln.

An der Stirnseite 13 des Gewindestabs 12 ist eine Markierung 13a in Form einer Gravur angebracht, welche die Dimensionen des Sperrankers angibt. Im gezeigten Ausführungsbeispiel werden die Dimensionen durch das Kürzel "C17" codiert, was aber lediglich beispielhaft zu verstehen ist.

Bei dem Kopplungselement 20 handelt es sich um einen entlang der Achse A ausgerichteten Rundkörper aus Stahl. Es umfasst eine flache und normal auf die Achse A stehende Basis 21, einen ausgehend von der Basis 21 konisch auseinanderlaufenden Mantel 22 und eine an den Mantel 22 anschließende, ebenfalls flache und normal auf die Achse A stehende Front 23. Die Basis 21 und die Front 23 sind parallel zueinander ausgerichtet und jeweils kreisförmig.

Ausgehend von einer Öffnung in der Basis 21 reicht eine entlang der Achse A ausgerichtete Ankerbohrung 24 ins Innere des Kopplungselements 20. Die Ankerbohrung 24 weist ein Innengewinde auf, das zum Außengewinde des Stabes 12 korrespondiert. Auch hier kann es sich um ein herkömmliches Dywidag-Gewinde handeln. Der Innendurchmesser der Ankerbohrung 24 korrespondiert zum Außendurchmesser des Stabes 12 und kann entsprechend beispielsweise zwischen 0,5 und 2 cm betragen. Die Tiefe der Ankerbohrung 24 ist geringer als die Länge des Stabes 12, sodass der Sperranker 10 im vollständig eingedrehten Zustand des Stabes maßgeblich nach hinten über die Basis 21 des Kopplungselements 20 hinaussteht. So kann erreicht werden, dass der Kopf 11 des Sperrankers 10 tief und stabil im Beton 100 verankert ist.

Neben der Ankerbohrung 24 umfasst das Kopplungselement 20 ferner eine Kopplungsbohrung 25, die sich ausgehend von einer Öffnung in der Front 23 des Kopplungselements 20 entlang der Achse A ins Innere des Kopplungselements 20 erstreckt. Die Ankerbohrung 24 und die Kopplungsbohrung 25 verlaufen koaxial. Auch die Kopplungsbohrung 25 kann ein in der Figur nicht näher dargestelltes Innengewinde aufweisen, um beispielsweise mit einem Gewindebolzen einen Aufhängeschuh für eine Kletterschalung anschrauben zu können. Der Durchmesser der Kopplungsbohrung 25 ist im gezeigten Ausführungsbeispiel etwas größer als der Durchmesser der Ankerbohrung 24 und kann beispielsweise zwischen 1 und 3 cm betragen. Die insgesamt drei Fräsungen 26 am Umfang der Kopplungsbohrung 25 dienen zum Eingriff eines Ausdrehwerkzeugs.

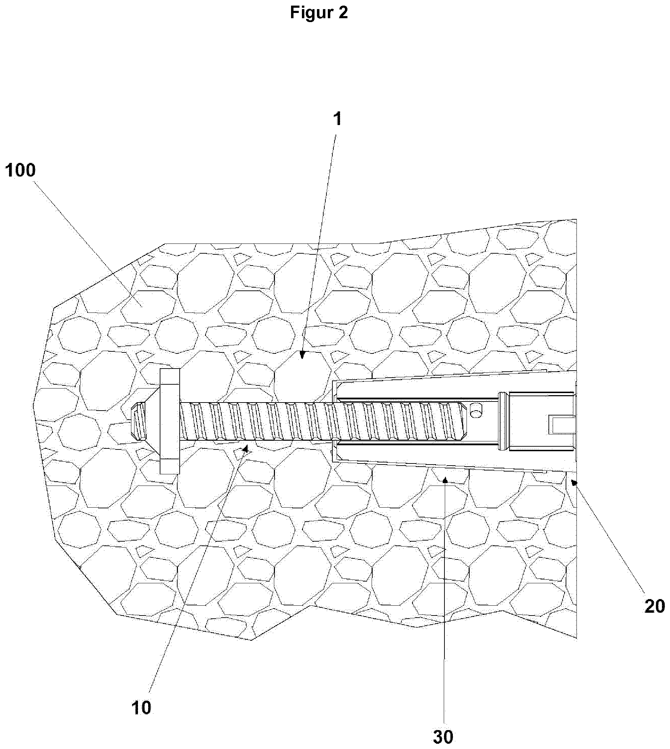

Die Ankerbohrung 24 und die Kopplungsbohrung 25 laufen im Inneren des Kopplungselements 20 ineinander, sodass das Kopplungselement 20 in axialer Richtung von der Basis 21 bis zur Front 23 durchbohrt ist. Dies hat den Vorteil, dass im einbetonierten Zustand des Verankerungselements 1, wie er in Figur 2 gezeigt ist, die Position des Sperrankers 10 innerhalb der Ankerbohrung 24 visuell festgestellt werden kann. Ferner ist im einbetonierten Zustand des Verankerungselements 1 die Stirnseite 13 der in der Ankerbohrung 24 aufgenommenen Gewindestange 12, mithin also die Markierung 13a, in der Abbildung "C17", von der Front 23 her sichtbar.

In der Ausführungsform gemäß Figuren 1-2 ist nahe dem Übergang zur Kopplungsbohrung 25 ein radial von der Wand der Ankerbohrung 24 abstehender Kerbstift 27a vorgesehen. Er verhindert einerseits, dass der Sperranker 10 zu weit in das Kopplungselement 20 eingedreht werden kann, und dient gleichzeitig als definierter Endpunkt für den Sperranker 10, damit dieser auch nicht zu wenig weit in das Kopplungselement 20 eingedreht wird. Der Boden der Kopplungsbohrung 25 wird durch einen ringförmigen Absatz 28 gebildet, der durch die Unterschiede der Durchmesser zwischen Ankerbohrung 24 und Kopplungsbohrung 25 resultiert.

In der Ausführungsform gemäß Figur 3 ist am Übergang zur Kopplungsbohrung 25 eine Presshülse 27b vorgesehen. Sie ist formschlüssig in eine Vertiefung an der Innenseite der Ankerbohrung 24 gepresst. Die der Kopplungsbohrung 25 zugewandte Seite der Presshülse 27a schließt bündig am ringförmigen Absatz 28 ab und bildet gemeinsam mit diesem den Boden der Kopplungsbohrung 25. Die der Ankerbohrung 24 zugewandte Seite der Presshülse 27a erfüllt dieselbe Funktion wie der Kerbstift 27a.

In allen Ausführungsformen gemäß Figuren 1-3 ist die Hülse 30 aus Kunststoff gefertigt. Sie hat eine becherförmige Gestalt und folgt der Kontur des Kopplungselements 20, weist also einen flachen und normal auf die Achse A stehenden Boden 31 und einen ausgehend vom Boden 31 konisch auseinanderlaufende Mantel 32 auf. Sie ist so auf das Kopplungselement geschoben, dass der Boden 31 der Hülse 30 an der Basis 21 des Kopplungselements 20 ansteht und der Mantel 32 der Hülse 30 am Mantel 22 des Kopplungselements 20 anliegt. Allerdings reicht der Mantel 32 der Hülse 30 nicht ganz bis zum deckenseitigen Ende des Mantels 22 des Kopplungselements 20, sondern endet kurz davor, sodass ein Kragen am deckenseitigen Ende der Mantelfläche 22 unbedeckt bleibt. Die Breite des Kragens kann beispielsweise zwischen 1 und 2 cm betragen. Die Hülse 30 umfasst keine Front sondern ist zur Vorderseite hin offen.

Im Boden 31 der Hülse 30 ist ein mit der Ankerbohrung 24 des Kopplungselements 20 fluchtender, kreisförmiger Durchbruch vorgesehen. Er hat einen etwas geringeren Radius als die Öffnung der Ankerbohrung 24 in der Basis 21 des Kopplungselements 20, sodass der Boden 31 der Hülse 30 geringfügig radial über den Umfangsrand der Ankerbohrung 24 übersteht. Der Überstand hat die Funktion einer Dichtlippe und verhindert ein Eindringen von flüssigem Beton in den Spalt zwischen der Ankerbohrung 24 und der Gewindestange 12. Im Bereich des Überstands hat der Boden 31 der Hülse 30 eine verringerte Stärke, um eine höhere Elastizität der Dichtlippe zu gewährleisten.

Seitlich der Kopplungsbohrung 25 ist an der Front 23 des Kopplungselements 20 auch noch eine Indikatorbohrung vorgesehen, in die ein Indikatorstift 29 aus Kunststoff eingesetzt ist. Der Indikatorstift 29 und die Hülse 30 haben dieselbe Farbe. So kann sichergestellt werden, dass ein Benutzer die richtige Hülse 30 auf das richtige Kopplungselement 20 setzt.

Das gezeigte Verankerungselement 1 gemäß allen Ausführungsbeispielen der Figuren 1-3 wird im Anwendungsfall einbetoniert und dient zur Montage einer Kletterschalung in den bestehenden Teilen eines Betonbauwerks. Dabei stellt der Sperranker 10 ein verlorenes Teil dar und verbleibt permanent im Beton 100. Das Kopplungselement 20 reicht an die Oberfläche des Betonkörpers und ist von außen her zugänglich. Es kann beim Abbau des Verankerungselements 1 ausgedreht und wiederverwertet werden. Die Möglichkeit zum Ausdrehen des Kopplungselements 20 ist dabei einerseits seiner konischen Gestalt und andererseits der Kunststoffhülse 30 geschuldet. Die Hülse 30 kann nach dem Ausdrehen des Kopplungselements 20 ebenfalls aus dem Beton entnommen und wiederverwertet werden. Zur Einfassung des Verankerungselements 1 in den Betonkörper 100 wird es so an einer Schalung befestigt, dass die Front 23 des Kopplungselements 20 an der Schalung anliegt und das Verankerungselement 1 dann entlang der Achse A in den Raum reicht, der dann mit Beton 100 ausgegossen wird. Die Schalung steht dabei parallel zur Ebene der Front 23 und mithin auch der Basis 21 des Kopplungselements 20.

## Patentansprüche

1. Verankerungselement (1) zur Befestigung einer Kletterschalung an einem Betonkörper (100), das einen Sperranker (10) und ein Kopplungselement (20) umfasst, wobei der Sperranker (10) einen Kopf (11) und eine Gewindestange (12) mit einem Außengewinde aufweist, wobei es sich bei dem Kopplungselement (20) um einen, insbesondere länglichen, Körper, insbesondere Rundkörper, mit einer Basis (21), und mit einem Mantel (22) und vorzugsweise einer Front (23), handelt, und wobei das Kopplungselement (20) eine von der Basis (21) axial nach innen reichende Ankerbohrung (24) aufweist, die ein Innengewinde aufweist, das mit dem Außengewinde der Gewindestange (12) zahnt, wobei am inneren Ende der Ankerbohrung (24) eine Öffnung, insbesondere Sichtöffnung, vorgesehen ist, sodass die Stirnseite (13) der in der Ankerbohrung (24) aufgenommenen Gewindestange (12) von außen sichtbar ist, wobei eine um das Kopplungselement (20) herum angeordnete Hülse (30) vorgesehen ist, die der Außenkontur der Basis (21) und des Mantels (22) des Kopplungselements (20) folgt, wobei ein zum Sperranker (10) zugewandter Boden (31) der Hülse (30) einen mit der Ankerbohrung (24) des Kopplungselements (20) fluchtenden, kreisförmigen Durchbruch aufweist, **dadurch gekennzeichnet,**
**dass** die Stirnseite (13) der Gewindestange (12) eine Markierung (13a) aufweist, und dass der Durchbruch einen geringeren Radius als die Öffnung der Ankerbohrung (24) in der Basis (21) des Kopplungselements (20) aufweist, sodass der Boden (31) der Hülse (30) geringfügig radial über den Umfangsrand der Ankerbohrung (24) übersteht.

2. Verankerungselement nach Anspruch 1, **dadurch gekennzeichnet,**
**dass** das Kopplungselement (20) ferner eine von der Front (23) axial nach innen reichende Kopplungsbohrung (25) aufweist und dass die Sichtöffnung sich von der Ankerbohrung (24) bis zur Kopplungsbohrung (25) erstreckt.

3. Verankerungselement nach Anspruch 2, **dadurch gekennzeichnet, dass** der Innendurchmesser der Ankerbohrung (24) kleiner als der Innendurchmesser der Kopplungsbohrung (25) ist.

4. Verankerungselement nach Anspruch 2 oder 3, **dadurch gekennzeichnet, dass** die Ankerbohrung (24) und die Kopplungsbohrung (25) ineinanderlaufen.

5. Verankerungselement nach Anspruch 4, **dadurch gekennzeichnet, dass** im Übergangsbereich von Ankerbohrung (24) und Kopplungsbohrung (25) ein Begrenzungselement (27) vorgesehen ist.

6. Verankerungselement nach Anspruch 5, **dadurch gekennzeichnet, dass** es sich bei dem Begrenzungselement (27) um einen Stift (27a) handelt, der radial von der Mantelfläche der Ankerbohrung (24) absteht.

7. Verankerungselement nach Anspruch 5, **dadurch gekennzeichnet, dass** das Begrenzungselement (27) durch einen Einsatz (27b), vorzugsweise einen zumindest abschnittsweise ringförmigen Einsatz (27b), gebildet ist.

8. Verankerungselement nach einem der vorhergehenden Ansprüche, **dadurch gekennzeichnet, dass** die Markierung (13a) an der Stirnseite (13) der Gewindestange (12) die Dimension des Sperrankers (10) angibt.

9. Verankerungselement nach einem der vorhergehenden Ansprüche, **dadurch gekennzeichnet, dass** es sich bei der Markierung (13a) an der Stirnseite (13) der Gewindestange (12) um eine Reliefmarkierung handelt.

10. Verankerungselement nach einem der Ansprüche 1 bis 8, **dadurch gekennzeichnet, dass** es sich bei der Markierung (13a) an der Stirnseite (1 3) der Gewindestange (12) um eine Farbmarkierung handelt.

11. Verankerungselement nach einem der vorhergehenden Ansprüche, **dadurch gekennzeichnet, dass** am Kopplungselement (20) ein Indikatorelement (29) vorgesehen ist, welches vorzugsweise an der Front (23) des Kopplungselements (20), bevorzugt lösbar, angebracht ist.

12. Verankerungselement nach Anspruch 11, **dadurch gekennzeichnet, dass** die Markierung (13a) und das Indikatorelement (29) eine übereinstimmende Symbolik aufweisen.

13. Verankerungselement nach Anspruch 12, **dadurch gekennzeichnet, dass** das Indikatorelement (29) eine Farbe aufweist, welche der Farbe der Farbmarkierung (13a) entspricht.

14. Verankerungselement nach einem der Ansprüche 11 bis 13, **dadurch gekennzeichnet, dass** das Indikatorelement (29) eine Farbe aufweist, welche der Farbe der Hülse (30) entspricht.

## Claims

1. Anchoring element (1) for fastening a climbing formwork to a concrete body (100), comprising a locking anchor (10) and a coupling element (20), wherein the locking anchor (10) has a head (11) and a threaded rod (12) with an external thread, wherein the coupling element (20) is a body, in particular an elongated body, with a base (21), and with a casing (22) and preferably a front (23), and wherein the coupling element (20) has an anchor bore (24) extending axially inwards from the base (21), which anchor bore (24) has an internal thread which meshes with the external thread of the threaded rod (12),
wherein an opening, in particular a viewing opening, is provided at the inner end of the anchor bore (24) so that the end face (13) of the threaded rod (12) accommodated in the anchor bore (24) is visible from the outside,
wherein a sleeve (30) is provided which is arranged around the coupling element (20) and follows the outer contour of the base (21) and the casing (22) of the coupling element (20), wherein a bottom (31) of the sleeve (30) facing the locking anchor (10) has a circular opening which is aligned with the anchor bore (24) of the coupling element (20),
**characterized in that**
the end face (13) of the threaded rod (12) has a marking (13a), and **in that** the opening has a smaller radius than the opening of the anchor bore (24) in the base (21) of the coupling element (20), so that the bottom (31) of the sleeve (30) projects slightly radially beyond the circumferential edge of the anchor bore (24).

2. Anchoring element according to claim 1, **characterized in,**
**that** the coupling element (20) further comprises a coupling bore (25) extending axially inwardly from the front (23), and that the sight opening extends from the anchor bore (24) to the coupling bore (25).

3. Anchoring element according to claim 2, **characterized in that** the inner diameter of the anchor bore (24) is smaller than the inner diameter of the coupling bore (25).

4. Anchoring element according to claim 2 or 3, **characterized in that** the anchor bore (24) and the coupling bore (25) run into each other.

5. Anchoring element according to claim 4, **characterized in that** a limiting element (27) is provided in the transition region of the anchor bore (24) and the coupling bore (25).

6. Anchoring element according to claim 5, **characterized in that** the limiting element (27) is a pin (27a) projecting radially from the lateral surface of the anchor bore (24).

7. Anchoring element according to claim 5, **characterized in that** the limiting element (27) is formed by an insert (27b), preferably an at least sectionally annular insert (27b).

8. Anchoring element according to one of the preceding claims, **characterized in that** the marking (13a) on the end face (13) of the threaded rod (12) indicates the dimension of the locking anchor (10).

9. Anchoring element according to one of the preceding claims, **characterized in that** the marking (13a) on the end face (13) of the threaded rod (12) is a relief marking.

10. An anchoring element according to any one of claims 1 to 8, **characterized in that** the marking (13a) on the end face (1 3) of the threaded rod (12) is a color marking.

11. An anchoring element according to one of the preceding claims, **characterized in that** an indicator element (29) is provided on the coupling element (20), which indicator element is preferably attached, preferably detachably, to the front (23) of the coupling element (20).

12. An anchoring element according to claim 11, **characterized in that** the marking (13a) and the indicator element (29) have a matching symbolism.

13. Anchoring element according to claim 12, **characterized in that** the indicator element (29) has a color corresponding to the color of the color marking (13a).

14. An anchoring element according to any one of claims 11 to 13, **characterized in that** the indicator element (29) has a color corresponding to the color of the sleeve (30).

## Revendications

1. Elément d'ancrage (1) pour fixer un coffrage grimpant sur un corps en béton (100), qui comprend une ancre d'arrêt (10) et un élément de couplage (20), dans lequel l'ancre d'arrêt (10) présente une tête (11) et une tige filetée (12) avec un filetage extérieur, dans lequel l'élément de couplage (20) est un corps, en particulier allongé, en particulier un corps rond avec une base (21), et avec une gaine (22) et de préférence une partie avant (23), et dans lequel l'élément de couplage (20) présente un alésage d'ancrage (24) s'étendant axialement vers l'intérieur depuis la base (21), présentant un filetage intérieur, qui vient en prise avec le filetage extérieur de la tige filetée (12), dans lequel une ouverture, en particulier une ouverture d'inspection, est prévue sur l'extrémité intérieure de l'alésage d'ancrage (24) si bien que la face frontale (13) de la tige filetée (12) logée dans l'alésage d'ancrage (24) est visible depuis l'extérieur, dans lequel une douille (30) disposée tout autour de l'élément de couplage (20) est prévue, laquelle suit le contour extérieur de la base (21) et de la gaine (22) de l'élément de couplage (20), dans lequel un fond (31) de la douille (30) tourné vers l'ancre d'arrêt (10) présente un ajour circulaire en affleurement avec l'alésage d'ancrage (24) de l'élément de couplage (20),
**caractérisé en ce que**
la face frontale (13) de la tige filetée (12) présente un marquage (13a), et **en ce que** l'ajour présente un rayon inférieur à l'ouverture de l'alésage d'ancrage (24) dans la base (21) de l'élément de couplage (20) si bien que le fond (31) de la douille (30) dépasse légèrement radialement du bord périphérique de l'alésage d'ancrage (24).

2. Élément d'ancrage selon la revendication 1, **caractérisé en ce que** l'élément de couplage (20) présente en outre un alésage de couplage (25) s'étendant axialement vers l'intérieur depuis la partie avant (23), et que l'ouverture d'inspection s'étend depuis l'alésage d'ancrage (24) jusqu'à l'alésage de couplage (25).

3. Élément d'ancrage selon la revendication 2, **caractérisé en ce que** le diamètre intérieur de l'alésage d'ancrage (24) est inférieur au diamètre intérieur de l'alésage de couplage (25).

4. Élément d'ancrage selon la revendication 2 ou 3, **caractérisé en ce que** l'alésage d'ancrage (24) et l'alésage de couplage (25) s'engagent l'un dans l'autre.

5. Élément d'ancrage selon la revendication 4, **caractérisé en ce qu'**un élément de limitation (27) est prévu dans la zone de transition de l'alésage d'ancrage (24) et de l'alésage de couplage (25).

6. Elément d'ancrage selon la revendication 5, **caractérisé en ce que** l'élément de limitation (27) est une goupille (27a), qui dépasse radialement de la surface enveloppante de l'alésage d'ancrage (24).

7. Elément d'ancrage selon la revendication 5, **caractérisé en ce que** l'élément de limitation (27) est formé par un insert (27b), de préférence un insert (27b) circulaire au moins par endroits.

8. Élément d'ancrage selon l'une quelconque des revendications précédentes, **caractérisé en ce que** le marquage (13a) sur la face frontale (13) de la tige filetée (12) indique la dimension de l'ancre d'arrêt (10).

9. Élément d'ancrage selon l'une quelconque des revendications précédentes, **caractérisé en ce que** le marquage (13a) sur la face frontale (13) de la tige filetée (12) est un marquage en relief.

10. Élément d'ancrage selon l'une quelconque des revendications 1 à 8, **caractérisé en ce que** le marquage (13a) sur la face frontale (13) de la tige filetée (12) est un marquage couleur.

11. Élément d'ancrage selon l'une quelconque des revendications précédentes, **caractérisé en ce qu'**est prévu sur l'élément de couplage (20) un élément indicateur (29), qui est monté, de préférence de manière amovible, de préférence sur la partie avant (23) de l'élément de couplage (20).

12. Élément d'ancrage selon la revendication 11, **caractérisé en ce que** le marquage (13a) et l'élément indicateur (29) présentent une symbolique concordante.

13. Élément d'ancrage selon la revendication 12, **caractérisé en ce que** l'élément indicateur (29) présente une couleur qui correspond à la couleur du marquage couleur (13a).

14. Élément d'ancrage selon l'une quelconque des revendications 11 à 13, **caractérisé en ce que** l'élément indicateur (29) présente une couleur qui correspond à la couleur de la douille (30).
